# EUROPÄISCHE PATENTANMELDUNG

(11) **EP 1 686 273 A1**
(43) Veröffentlichungstag der Anmeldung: **02.08.2006**
(21) Anmeldenummer: 06001665.6
(22) Anmeldetag: 27.01.2006
(51) Int. Cl.: F16C 13/00, F26B 13/18

(54) **Walze**

(30) Priorität: 31.01.2005 DE 202005001553 U
(71) Anmelder: Derichs, Eberhard, 47807 Krefeld (DE)
(72) Erfinder: Derichs, Eberhard, 47807 Krefeld (DE)
(74) Vertreter: DR. STARK & PARTNER

(57) **Zusammenfassung**

Die Erfindung betrifft eine Walze (1), insbesondere für die Herstellung und/oder Bearbeitung von kaschierten oder laminierten Materialen, mit einer insbesondere antreibbaren Achse und einem auf der Achse (2) drehfest abgestützten, von einem Wärmetauschmedium durchströmbaren Doppelmantel (3), der eine innere Stützstruktur (4) und einen darauf aufgeschrumpften Außenmantel (5) aufweist.

Um eine Walze anzugeben, die bei gleichzeitig guter Wärmeabfuhr eine geringere Temperatur des Wärmetauschmediums ermöglicht, soll der Außenmantel (8) einen elektrolytisch aufgebauten Kupfermantel (6) mit einer verchromten Außenfläche (7) aufweisen.

## Beschreibung

Die Erfindung betrifft eine Walze, insbesondere für die Herstellung und/oder Bearbeitung von kaschierten oder laminierten Materialen, mit einer insbesondere antreibbaren Achse und einem auf der Achse drehfest abgestützten, von einem Wärmetauschmedium durchströmbaren Doppelmantel, der eine innere Stützstruktur und einen darauf aufgeschrumpften Außenmantel aufweist.

Aus der Praxis sind derartige Walzen aus den Bereichen Kaschieren und Extrusionsbeschichtung in verschiedensten Ausprägungen bekannt. Am gebräuchlichsten sind Walzen mit einem aufgeschrumpften Stahlmantel, bei denen aufgrund der Wärmeleitfähigkeit des Stahlmaterials relativ niedrige Temperaturen für das Wärmetauschmedium erforderlich sind, um die in der Praxis geforderten Arbeitsgeschwindigkeiten realisieren zu können.

Nachteilig hierbei ist, dass durch die niedrige Temperatur des Wärmetauschmediums auch eine niedrige Temperatur des Außenmantels resultiert, wodurch Feuchtigkeit kondensiert und sich am Außenmantel ablagert.

Aufgabe der Erfindung ist es, die vorgenannten Nachteile zu vermeiden und eine Walze der eingangs genannten Art anzugeben, die bei gleichzeitig guter Wärmeabfuhr eine geringere Temperatur des Wärmetauschmediums ermöglicht.

Diese Aufgabe wird gelöst durch eine Walze, insbesondere für die Herstellung und/oder Bearbeitung von kaschierten oder laminierten Materialen, mit einer insbesondere antreibbaren Achse und einem auf der Achse drehfest abgestützten, von einem Wärmetauschmedium durchströmbaren Doppelmantel, der eine innere Stützstruktur und einen darauf aufgeschrumpften Außenmantel aufweist, wobei der Außenmantel einen elektrolytisch aufgebauten Kupfermantel mit einer verchromten Außenfläche aufweist. Hierdurch wird bei einer durch die Verchromung harten und verschleißfesten Arbeitsfläche eine gute Wärmeabfuhr selbst bei einer Temperatur das Wärmetauschmediums gewährleistet, die weniger niedrig ist als dies üblicherweise der Fall ist und insbesondere ca. 20°C betragen kann. Auch kann die Arbeitsfläche mit einem auf den konkreten Anwendungsfall abgestimmten Oberflächenstruktur versehen sein, die durch die Verchromung einerseits sehr beständig ist und andererseits auch sehr detailliert sein kann.

Vorzugsweise kann die innere Stützstruktur Stützelemente beinhalten, die zumindest in ihrem Kontaktbereich mit einem weiteren Bestandteil des Doppelmantels aus einem mit dem entsprechenden weiteren Bestandteil des Doppelmantels elektrochemisch harmonierenden Material, insbesondere Edelstahl, bestehen, so dass erhöhte Korrosionsanfälligkeit durch ungünstige Materialpaarung(en) vermieden wird. Dabei kann lediglich der unmittelbare Kontaktbereich der Stützelemente aus dem harmonierenden Material sein, es können aber auch alle im Strömungsverlauf des Wärmetauschmediums befindlichen Bereiche oder sogar die vollständigen Stützelemente aus diesem Material bestehen.

Auch können insbesondere aus einem mit zumindest einigen Bestandteilen des Doppelmantels elektrochemisch harmonisierenden Material bestehende Stirnkappen vorgesehen sein.

Erfindungsgemäß können die Stützelemente einen in etwa spiraligen Strömungskanal zur geführten Leitung des Wärmetauschmediums bilden, und die Stützelemente können in Abhängigkeit von den Materialeigenschaften des Wärmetauschmediums und dessen Strömungsparametern, wie z. B. der Strömungsgeschwindigkeit, derart ausgebildet und angeordnet sein, dass bei bestimmungsgemäßer Benutzung der Walze ein turbulenter Wärmeübergang zwischen dem Kupfermantel und dem Wärmetauschmedium gewährleistet ist.

Vorteilhafterweise kann im Strömungskreislauf des Wärmetauschmediums, insbesondere im Bereich des Doppelmantels der Walze, eine vorzugsweise aus Magnesium bestehende Opferanode vorgesehen sein, so dass bei einem entsprechend "agressivem" Wärmetauschmedium zuerst die Opferannode reagiert und verschleißt, bevor insbesondere aus Kupfer oder Stahl bestehende Bauteile der Walze angegriffen werden. Dies ist vor allem insoweit von Bedeutung, als auch durch nicht zur Walze gehörende Bauteile im Strömungskreislauf, wie z.B. Rohrleitungen, Pumpen oder dergleichen, korrosionsfördernde Elemente in das Wärmetauschmedium gelangen können.

Bei einem bevorzugten Ausführungsbeispiel kann ein Biegelinienkompensator vorgesehen sein, so dass entsprechend der im Betrieb zu erwartenden Belastungszustände bereits bei der Auslegung der Walze ein Ausgleich vorgesehen werden kann.

Vorzugsweise kann zumindest der Doppelmantel innenseitig, insbesondere die Gesamtheit aller das Wärmetauschmedium führenden Bereiche, mit einer reibungsmindernden Beschichtung, wie Z. B. PTFE (Polytetrafluorethylen, auch unter dem Markenname "Teflon" bekannt) oder Silikon, versehen sein.

Im Folgenden wird ein in der Zeichnung dargestelltes Ausführungsbeispiel der Erfindung erläutert. Es zeigen:
- Fig. 1: eine Schnittdarstellung einer erfindungsgemäßen Walze,

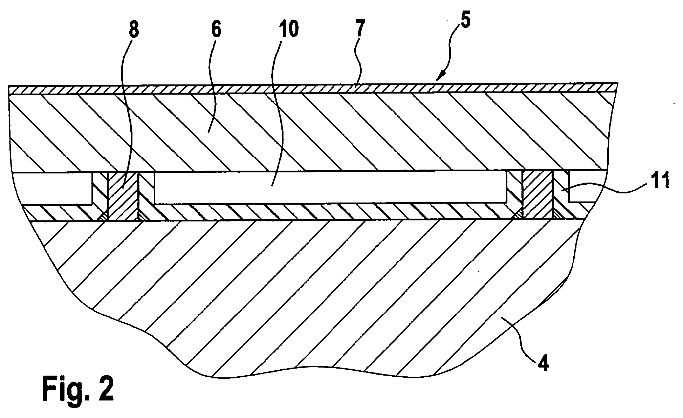

- Fig. 2: das Detail "X" des Gegenstandes der Fig. 1 und

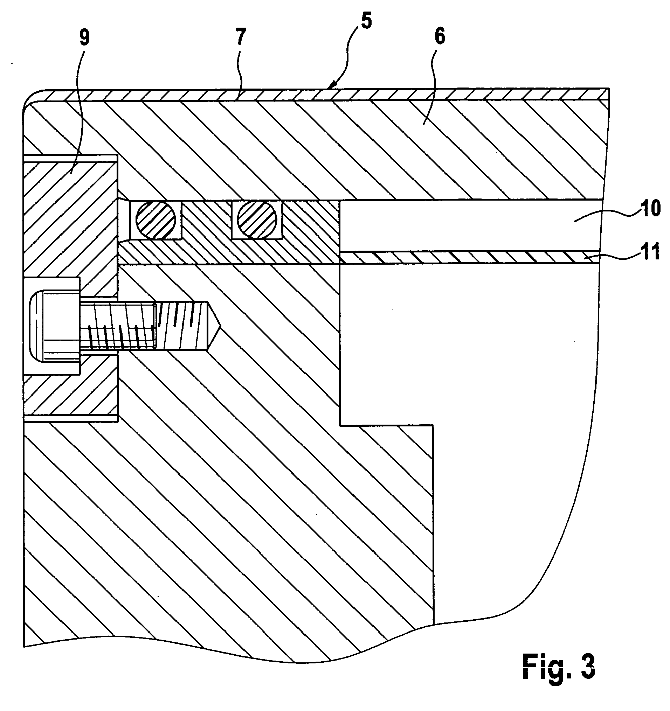

- Fig. 3: das Detail "Y" des Gegenstandes der Fig. 1.

In allen Figuren werden für gleiche bzw. gleichartige Bauteile übereinstimmende Bezugszeichen verwendet.

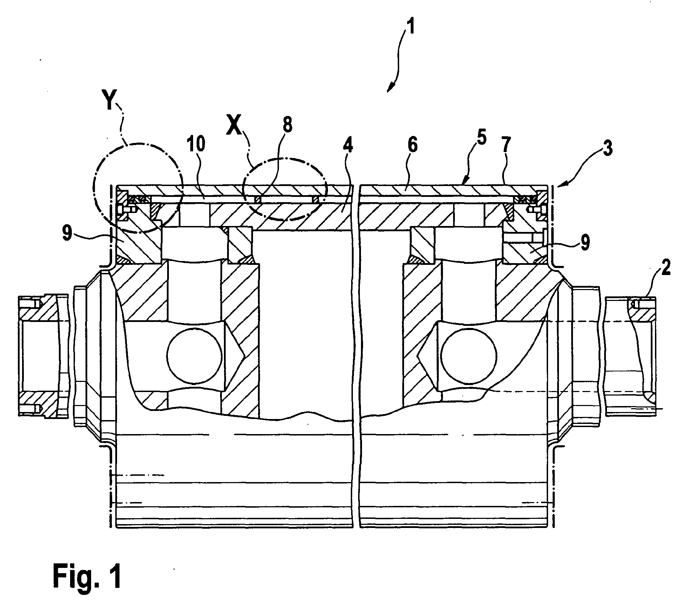

Fig. 1 zeigt eine Walze 1 für die Herstellung und/oder Bearbeitung von kaschierten oder laminierten Materialen. Die Walze 1 beinhaltet eine antreibbare Achse 2, auf der ein von einem Wärmetauschmedium durchströmbarer Doppelmantel 3 mit einer inneren Stützstruktur 4 und einem Außenmantel 5 drehfest abgestützt ist.

Der Außenmantel 5 des Doppelmantels 3 weist einen elektrolytisch aufgebauten Kupfermantel 6 mit einer verchromten Außenfläche 7 auf, die mit einer auf den konkreten Anwendungsfall abgestimmten Oberflächenstruktur versehen sein kann.

Die innere Stützstruktur 4 beinhaltet Stützelemente 8, die zumindest in ihrem Kontaktbereich mit einem weiteren Bestandteil des Doppelmantels aus einem mit dem entsprechenden weiteren Bestandteil des Doppelmantels elektrochemisch harmonierenden Material, insbesondere Edelstahl, bestehen. Dabei kann lediglich der unmittelbare Kontaktbereich der Stützelemente 8 aus dem harmonierenden Material sein, es können aber auch alle im Strömungsverlauf des Wärmetauschmediums befindlichen Bereiche oder sogar die vollständigen Stützelemente 8 aus diesem Material bestehen.

Weiterhin sind Stirnkappen 9 vorgesehen, die ebenfalls aus einem mit zumindest einigen Bestandteilen des Doppelmantels 3 elektrochemisch harmonisierenden Material bestehen.

Die Stützelemente 8 bilden in dem Doppelmantel 3 einen in etwa spiraligen Strömungskanal 10 zur geführten Leitung des Wärmetauschmediums, wobei die Stützelemente in Abhängigkeit von den Materialeigenschaften des Wärmetauschmediums und dessen Strömungsparametern, wie z. B. der Strömungsgeschwindigkeit, derart ausgebildet und angeordnet sein können, dass bei bestimmungsgemäßer Benutzung der Walze 1 ein turbulenter Wärmeübergang zwischen dem Kupfermantel 6 und dem Wärmetauschmedium gewährleistet ist.

Vorteilhafterweise kann im Strömungskreislauf des Wärmetauschmediums, insbesondere im Bereich des Doppelmantels 3 der Walze 1, eine vorzugsweise aus Magnesium bestehende und in der Zeichnung nicht dargestellte Opferanode vorgesehen sein, so dass bei einem entsprechend "agressivem" Wärmetauschmedium zuerst die Opferannode reagiert und verschleißt, bevor insbesondere aus Kupfer oder Stahl bestehende Bauteile der Walze 1 angegriffen werden.

Der Doppelmantel ist innenseitig mit einer reibungsmindernden Beschichtung 11, wie Z. B. PTFE (Polytetrafluorethylen, auch unter dem Markenname "Teflon" bekannt) oder Silikon, versehen. Diese kann vorteilhafterweise auch auf die Gesamtheit aller das Wärmetauschmedium führenden Bereiche ausgedehnt sein.

## Patentansprüche

1. Walze (1), insbesondere für die Herstellung und/oder Bearbeitung von kaschierten oder laminierten Materialen, mit einer insbesondere antreibbaren Achse (2) und einem auf der Achse (2) drehfest abgestützten, von einem Wärmetauschmedium durchströmbaren Doppelmantel (3), der eine innere Stützstruktur (4) und einen darauf aufgeschrumpften Außenmantel (5) aufweist, **dadurch gekennzeichnet, dass** der Außenmantel (5) einen elektrolytisch aufgebauten Kupfermantel (6) mit einer verchromten Außenfläche (7) aufweist.

2. Walze (1) nach Anspruch 1, **dadurch gekennzeichnet, dass** die innere Stützstruktur (4) Stützelemente (8) beinhaltet, die zumindest in ihrem Kontaktbereich mit einem weiteren Bestandteil des Doppelmantels (3) aus einem mit dem entsprechenden weiteren Bestandteil des Doppelmantels (3) elektrochemisch harmonierenden Material, insbesondere Edelstahl, besteht.

3. Walze () nach Anspruch 2, **dadurch gekennzeichnet, dass** die Stützelemente (8) einen in etwa spiraligen Strömungskanal (10) zur geführten Leitung des Wärmetauschmediums bilden.

4. Walze () nach Anspruch 2 oder 3, **dadurch gekennzeichnet, dass** die Stützelemente (8) in Abhängigkeit von den Materialeigenschaften des Wärmetauschmediums und dessen Strömungsparametern derart ausgebildet und angeordnet sind, dass ein turbulenter Wärmeübergang zwischen dem Kupfermantel (6) und dem Wärmetauschmedium bei bestimmungsgemäßer Benutzung der Walze (1) gewährleistet ist.

5. Walze () nach einem der Ansprüche 1 bis 4, **dadurch gekennzeichnet, dass** im Strömungskreislauf des Wärmetauschmediums, insbesondere im Bereich des Doppelmantels (3) der Walze (1), eine vorzugsweise aus Magnesium bestehende Opferanode vorgesehen ist.

6. Walze (1) nach einem der Ansprüche 1 bis 5, **dadurch gekennzeichnet, dass** ein Biegelinienkompensator vorgesehen ist.

7. Walze (1) nach einem der Ansprüche 1 bis 6, **dadurch gekennzeichnet, dass** insbesondere aus einem mit dem Doppelmantel (3) elektrochemisch harmonisierenden Material bestehende Stirnkappen (9) vorgesehen sind.

8. Walze (1) nach einem der Ansprüche 1 bis 7, **dadurch gekennzeichnet, dass** zumindest der Doppelmantel (3) innenseitig, insbesondere die Gesamtheit aller das Wärmetauschmedium führenden Bereiche, mit einer reibungsmindernden Beschichtung (11), wie z. B. PTFE oder Silikon, versehen sind.
